# DEMANDE DE BREVET EUROPEEN

(11) **EP 2 003 884 A1**
(43) Date de publication de la demande: **17.12.2008**
(21) Numéro de dépôt: 08290499.6
(22) Date de dépôt: 30.05.2008
(51) Int. Cl.: H04N 5/44

(54) **Dispositif de télécommande sans fil pour lecteur enregistreur numérique multimedia connectable à un réseau et système associé**

(30) Priorité: 13.06.2007 FR 0704214
(71) Demandeur: Archos S.A., 91430 Igny (FR)
(72) Inventeur: Crohas, Henri, 91370 Verrières le Buisson (FR); Yves, Grégoire, 92290 Chatenay Malabry (FR)

(57) **Abrégé**

Dispositif pour commander à distance des fonctions d'un appareil lecteur-enregistreur numérique multimédia connectable à un réseau, système au sein duquel il est mis en oeuvre.

## Description

La présente invention concerne un dispositif pour télécommander un lecteur enregistreur numérique multimédia connectable à un réseau. L'invention concerne en outre le système formé par le dispositif selon l'invention, l'appareil qui reçoit et exploite les signaux émis par le dispositif et un moyen de restitution de l'image en 2D et/ou 3D et/ou un moyen de restitution du son.
A l'ère de la convergence numérique, les plateformes techniques mises en oeuvre dans les équipements audiovisuels numériques sont proches de celles mises en oeuvre dans les microordinateurs. De plus, les équipements audiovisuels numériques ont avantage à être connectés directement ou indirectement à un réseau tel qu'Internet (World Wide Web), à la fois source possible de programmes audio et/ou vidéo, d'informations de programmation (EPG), moyen d'accès à des serveurs de contenus et/ou de services dédiés mais aussi pour l'accès à des services génériques tels que la navigation sur Internet, le courrier électronique, la mise à jour des logiciels embarqués etc.
Les sites internet sont de plus en plus riches en information graphiques et en contenus vidéo. Parallèlement on assiste à une démocratisation des écrans plats de grande taille capables d'un affichage en haute définition. L'équipement audiovisuel, en ce qu'il est traditionnellement plus simple à utiliser qu'un ordinateur, est le moyen grand public de prédilection pour proposer les nouveaux services de la convergence numérique.

Les télécommandes sans fil à l'état de l'art n'offrent pas une ergonomie satisfaisante pour ces nouveaux services. En général elles privilégient la compacité et la proximité de conception avec les télécommandes audiovisuelles traditionnelles qu'elles n'améliorent qu'à la marge.

On connait des solutions telles que décrites dans le brevet US2006/0080710 ou US2005/0162569 qui offrent un clavier minimal en plus des fonctions de commande à distance audiovisuelles traditionnelles. Cette solution peut convenir lorsque le besoin d'entrée de caractères alphanumériques est marginal mais montre très vite ses limites pour par exemple répondre à un mail, pour entrer une adresse de site internet ou pour saisir le titre d'une oeuvre à rechercher dans un moteur de recherche.

On connait des solutions telles que décrites dans le brevet US5903259 qui associe des fonctions de commande à distance audiovisuelles traditionnelles à un clavier alphanumérique standard faisant partie d'un système d'ordinateur. Cette solution peut convenir lorsque le besoin d'entrée de caractères alphanumériques est nécessaire mais est insatisfaisante du point de vue de l'ergonomie puisque la taille de la télécommande est celle d'un clavier d'ordinateur standard et doit donc être maintenue sur un support pour pouvoir être utilisé. L'appareil décrit dans le brevet US2005/0025550 offre le raffinement supplémentaire de pouvoir séparer physiquement la télécommande du clavier alphanumérique. Ce dernier nécessite toujours un support pour pouvoir être utilisé.
La solution proposée dans le brevet WO99/62287 associe des fonctions de commande à distance audiovisuelle, sur un premier élément de couverture, à un clavier alphanumérique sur un second élément. Ces deux éléments sont reliés de façon à être repliés l'un sur l'autre en position fermée, ce qui permet à l'appareil de pouvoir n'être utilisé que d'une seule main. Dans cette configuration, le clavier n'est accessible qu'en position ouverte de l'appareil, empêchant alors une utilisation simultanée de ses deux parties. Cette modalité d'utilisation dessert le fluidité d'utilisation notamment lors de la navigation sur internet qui implique l'écriture d'adresses de sites, ou de mails, et de navigation à l'intérieur d'une page, et ce, de façon quasi simultanée.

Les solutions à l'état de l'art n'apportent qu'une réponse partielle et insatisfaisante au problème en ne permettant pas une utilisation dans des conditions de confort suffisantes pour exploiter tout le potentiel fonctionnel des nouvelles plateformes techniques et des services associés.

L'invention vise à offrir une ergonomie satisfaisante pour l'ensemble des applications proposables sur une plateforme numérique capable de lire et d'enregistrer des contenus numériques et pouvant en outre être connectée à un réseau.

On entend par connexion à un réseau toute connexion à un réseau local ou d'infrastructure permettant un partage de ressources locales, par exemple des contenus audio et/ou vidéo stockés dans un ou plusieurs ordinateurs et/ou l'accès à des ressources distantes telles que des serveurs de contenus et/ou de services externes. Il peut s'agir par exemple d'équipements connectés à Internet de manière indirecte par une liaison à une passerelle avec un réseau d'infrastructure. Par exemple une connexion à une « Box » ADSL ou fibre optique, au moyen d'une liaison Ethernet ou par Wifi.
L'équipement commandé à distance peut également dans certaines variantes de mise en oeuvre, être connecté directement à un réseau d'infrastructure tel que par exemple Wimax, HSDPA, HSUPA, HSOPA etc.

On entend par télécommande sans fil l'utilisation d'une liaison, au moins unidirectionnelle, n'utilisant pas de support filaire entre la télécommande et l'appareil électronique exploitant les commandes à distance reçues.
La liaison sans fil peut être de tout type sans sortir du cadre de l'invention. Par exemple par infra rouge, par ultrasons ou par une liaison radiofréquence par exemple dans la bande ISM selon un standard de l'industrie tel que ZigBee ou un standard propriétaire ou encore dans une bande de fréquence associée à un protocole donné tel que Wifi, Bluetooth etc.

Le dispositif de télécommande selon l'invention utilise une liaison sans fil pour commander à distance des fonctions d'un lecteur-enregistreur multimédia numérique connectable à un réseau. Le dispositif comprend :
- Au moins un moyen pour se déplacer dans un ensemble de choix,
- Au moins un moyen pour valider un choix dans un ensemble de choix,
- Au moins un moyen pour déplacer un pointeur sur la surface d'un écran ou dans un espace de restitution 3D,
- Au moins un moyen pour effectuer des actions en relation avec un pointeur,
- Un clavier alphanumérique comprenant une seule lettre par touche au moins pour les lettres courantes et non accentuées d'un jeu de caractères donné.

L'au moins un moyen pour se déplacer dans un ensemble de choix comprend au moins une touche dédiée. Il s'agit d'au moins un moyen pour explorer un ensemble de choix proposés sur un dispositif d'affichage attaché à, ou embarqué dans, l'équipement commandé.
Il peut s'agir par exemple d'un bouton unique sur lequel un premier appui fait apparaitre un ensemble de choix possibles à l'écran, par exemple un menu, chaque appui provoquant un déplacement vers le choix suivant, le choix sélectionnable à un instant donné étant le seul affiché ou étant distinguable des autres choix affichés par une différence visible. Après une durée d'inactivité sensiblement déterminée l'affichage spécifique relatif au choix disparait.
Bien entendu, il est possible d'enrichir le dispositif en mettant en oeuvre plusieurs boutons pour naviguer plus confortablement dans l'espace des choix, 2 boutons pour explorer des choix présentés en listes, 4 boutons pour explorer plus directement des choix homogènes présentés en matrices ou des choix hétérogènes ou encore pour parcourir des arborescences. Des moyens tels qu'un joystick, une surface tactile etc. peuvent également être utilisés pour se déplacer dans un ensemble de choix sans sortir du cadre de l'invention.
Le dispositif selon l'invention comprend au moins un moyen pour valider un choix parmi une pluralité proposée. Dans une variante de mise en oeuvre reposant sur un nombre réduit de commandes, par exemple un seul bouton pour explorer un ensemble de choix et le même bouton pour valider un des choix proposés, l'invention prévoit d'utiliser la variable temps pour discriminer les commandes. Par exemple, lorsque l'utilisateur se déplace dans l'ensemble des choix tel que décrit précédemment, le passage au choix suivant se fait au relâchement du bouton. Positionné sur un choix donné, maintenir l'appui sur le bouton au delà d'un temps sensiblement déterminé valide ce choix. La sortie de la procédure de choix ainsi que le retour en arrière sur un choix déjà effectué feront avantageusement partie des choix proposés à toutes les étapes de la procédure. Bien entendu il est avantageux de proposer une commande dédiée pour la validation ainsi que si possible une commande d'annulation.
Dans une variante de mise en oeuvre particulièrement préférée, le déplacement dans des ensembles de choix, la validation de ces choix ou leur annulation repose sur quatre touches ou encore sur une « croix directionnelle » à quatre contacts avec un bouton central dédié à la validation.

L'au moins un moyen pour déplacer un pointeur sur la surface d'un écran ou dans un espace de restitution 3D, peut reposer sur des contacts unitaires dont l'actionnement provoque la transmission de commandes différenciées interprétées par l'appareil les recevant comme des commandes de déplacement du pointeur dans la direction choisie. Pour décrire une surface, quatre contacts pourraient suffire. Cependant le confort d'utilisation est grandement amélioré par une augmentation du nombre de contacts intermédiaires entre les quatre directions principales. Dans un mode de mise en oeuvre préféré de l'invention, un compromis de huit contacts physiques et un traitement des sollicitations simultanées des contacts adjacents, donne une sensation de toucher quasi-analogique et continu satisfaisant. Le traitement des sollicitations simultanées sur les contacts adjacents consiste à générer un codage différencié simulant un contact virtuel intermédiaire, lorsque deux contacts adjacents sont sollicités simultanément.
Bien entendu un dispositif de pointage dont le capteur est nativement analogique tel qu'un pavé tactile basé sur une détection capacitive ou résistive ou encore une solution de détection discrète dont la résolution angulaire est plus grande permettent une mise en oeuvre de l'invention encore plus confortable à utiliser.

L'au moins un moyen pour effectuer des actions en relation avec un pointeur est destiné à offrir des fonctionnalités analogues à celles des dispositifs de pointage traditionnels tels que souris, « trackball », pavé numérique etc. par l'intermédiaire du dispositif de télécommande. Il s'agit par exemple de reproduire une fonction « click droit », « click gauche » et accrochage du pointeur à partir de sa position à l'instant d'exécution de la commande.

Un clavier alphanumérique comprenant une seule lettre par touche au moins pour les lettres courantes et non accentuées d'un jeu de caractères donné est une caractéristique importante de l'invention en ce qu'elle vise à offrir une ergonomie satisfaisante au regard de la saisie de contenus textuels avec des moyens compacts et à faible coût. La plupart des moyens de saisie alphanumérique de petite taille à l'état de l'art comme par exemple les téléphones agencent leur clavier pour minimiser le nombre de touches. Ces solutions à l'état de l'art affectent plusieurs lettres à au moins certaines touches. Ainsi non seulement l'utilisateur ne retrouve pas la répartition des touches à laquelle il est habitué, par exemple QWERTY ou AZERTY, mais il doit taper un plus grand nombre de fois sur les touches pour une saisie donnée par rapport à la solution d'un clavier offrant au moins une touche par lettre courante d'un jeu de caractères donné. Bien entendu, plus il y a de touches dédiées, par exemple pour des caractères accentués ou des signes de ponctuation d'usage fréquents, plus le confort d'utilisation est grand. Un compromis satisfaisant est un clavier qui offre une touche pour chaque lettre non accentuée par exemple du jeu de caractère latin dit international, chaque touche étant positionnée au sein du clavier sensiblement de manière traditionnelle par exemple sur trois rangées dans un ordre QWERY. Tout ou partie des caractères accentués, des signes de ponctuation ou des symboles usuels sont offerts avantageusement en tant que signification alternative des touches principalement affectées à une lettre courante par défaut.
L'invention prévoit qu'au moins une touche du clavier a plusieurs significations. Il est également prévu que la signification associée à l'au moins une touche est déterminée par une action préalable de l'utilisateur sur le dispositif. Par exemple, au moins un jeu de caractères alternatif peut être proposé par appui préalable sur une touche associée à sa sélection. Les commandes usuelles de changement de casse sont aussi avantageusement proposées. Il s'agit par exemple d'offrir une touche pour la commande d'inversion d'état temporaire majuscule/minuscule et/ou d'une touche pour la commande de changement maintenu de cet état. Dans une mise en oeuvre avantageuse de l'invention l'état en cours de certains paramètres tel que majuscule/minuscule ou insertion/remplacement sont indiqués par un pictogramme à l'écran.
Des variantes de mise en oeuvre peuvent déterminer automatiquement la signification associée à l'au moins une touche par le contexte applicatif. Par exemple les touches « plus » et « moins » qui dans un contexte applicatif de lecture audio et/ou vidéo commandent le volume sonore peuvent signifier le caractère « plus » et « moins » dans un contexte applicatif de saisie de caractères alphanumériques. De même, des touches de chiffres affectées à la sélection directe de canaux ou de valeurs paramètres dans certains contextes applicatifs peuvent représenter une entrée du caractère correspondant dans une application de saisie.

Certaines variantes de mise en oeuvre de l'invention peuvent inclure un détecteur de position. Ce capteur qui peut être à minima par exemple un simple contact à bille permettant de discriminer l'orientation verticale ou horizontale du dispositif. Il est ainsi possible de différencier automatiquement l'effet d'une commande par l'orientation préalable du dispositif au moment de l'appui sur une touche. Par exemple, les touches affectées aux caractères chiffres et/ou aux caractères « plus » et « moins » dans une utilisation horizontale dédiée à la saisie de caractères alphanumériques chiffres permettent de changer de canal ou de modifier le niveau sonore par simple changement d'orientation préalable à l'appui sur la touche.

Dans le cas d'un dispositif de télécommande utilisable selon plusieurs orientations et qui transmet ses commandes par infrarouge, il sera avantageux voir nécessaire d'inclure au moins un émetteur diffusant vers le récepteur dans chaque position d'utilisation. Il est également possible de mettre en oeuvre un réflecteur optique agencé pour transmettre les signaux infrarouges issus d'un même émetteur ou d'un même groupe d'émetteurs dans les directions d'intérêt relativement aux orientations possibles du dispositif.

Dans certaines variantes de l'invention, des moyens sont mis en oeuvre pour indiquer visuellement la signification attendue en cas d'appui sur une touche à significations potentielles multiples. Cette signification étant automatiquement indiquée à l'utilisateur en fonction d'un contexte. Ce contexte peut être l'orientation du dispositif. Par exemple un simple marquage lisible d'une manière préférentielle en fonction de l'orientation du dispositif conviendra. Il est prévu dans une mise en oeuvre plus sophistiquée d'utiliser des polariseurs pour ne rendre visible que les marquages appropriés pour une orientation donnée. Dans une mise en oeuvre encore plus sophistiquée sont utilisés des moyens d'affichage à très faible consommation d'énergie et à faible coût comme par exemple basées sur des encres électroluminescentes ou encore sur l'utilisation de « papier électronique ». Ces moyens d'affichage commandés par l'électronique embarquée dans le dispositif selon l'invention complétés avantageusement par un canal de retour d'informations provenant de l'appareil commandé à distance, permettent une visualisation de la signification associée à au moins certaines touches du dispositif en fonction du contexte applicatif.

Lorsque plusieurs jeux de caractères alternatifs sont offerts sur tout ou partie des touches du clavier, l'ergonomie sera améliorée par l'utilisation de couleurs différenciées associant la touche de sélection d'un jeu de caractères alternatifs avec le marquage des caractères alternatifs associés aux touches. L'association des significations alternatives des touches avec la touche de sélection d'un jeu de significations alternatives donné pourra aussi reposer sur la localisation du marquage correspondant, par exemple les marquages du coin de gauche ou du coin de droite de la touche. Si la surface de la touche est suffisamment grande pour ajouter des marquages supplémentaires qui restent lisibles, des jeux de caractères supplémentaires peuvent être offerts par exemple pour offrir des lettres accentuées ou non qui sont spécifiques à certaines langues. Sur des touches d'une certaine hauteur, le coté avant de la touche, s'il est légèrement biseauté, peut faire l'objet d'un marquage pour des caractères alternatifs. Le marquage de la signification des touches est traditionnellement réalisé sur la face supérieure des touches mais on ne sort pas du cadre de l'invention si tout ou partie des marquages relatifs aux touches du clavier sont réalisés sur des parties fixes situées entres les touches le cas échant.

Le dispositif selon l'invention peut comprendre en outre avantageusement au moins une commande en relation avec une application audiovisuelle. Il peut s'agir par exemple d'une commande de volume de restitution du son, de silence (« mute » en langue anglaise), d'une commande pour activer un écran externe etc. Dans une variante de mise en oeuvre très avantageuse de l'invention, les touches du clavier normalement prévues pour saisir des caractères alphanumériques dans des contextes le nécessitant, comme par exemple dans une application de courrier électronique, sont réaffectées à la sélection directe de sources de programme dans un contexte d'application purement audiovisuel. On entend par sélection directe de sources de programme l'accès par une commande à une source donnée de programme audio et/ou vidéo. Cette source préalablement affectée par l'utilisateur à une touche déterminée du dispositif selon l'invention pouvant être assimilée à une chaîne de télévision, une station de radio, une source d'information continue en mode textuel etc. En effet, dans un système selon l'invention les sources de programmes sont potentiellement multiples et l'utilisateur peut avoir des sources préférées ou d'intérêt récurrent en termes de contenus qui mixent les origines. Par exemple, l'utilisateur peut avoir quelques chaines de télévision traditionnelle préférées issues d'une « set top box » ou d'un tuner externe au lecteur enregistreur numérique multimédia et/ou des stations de radio préférées issues d'un tuner radio. Mais l'utilisateur peut aussi avoir des « chaines » ou des « stations » préférées respectivement de « télévision » ou de « radio », généralistes ou thématiques venant du monde de l'Internet accessibles par une connexion à un réseau. Le moyen technique par lequel un programme est diffusé ou accédé n'est plus un critère de sélection pertinent en tant que tel. L'invention prévoie d'offrir un accès sensiblement direct à des programmes préférés ou d'intérêt pour les restituer par des moyens externes, ces programmes pouvant provenir potentiellement de tous types de sources y compris les moyens d'enregistrement locaux mis à contribution sur le principe des « podcast » appliqué à la radio et/ou à la vidéo.

Une des caractéristiques essentielles de l'invention est qu'il s'agit bien d'une télécommande c'est-à-dire un dispositif autonome dont la taille est telle qu'il peut être tenu dans une main.

Une variante préférée de mise en oeuvre de l'invention est agencée pour être tenue à deux mains, les touches pouvant être atteintes par l'un et/ou l'autre des deux pouces. Cette variante est particulièrement ergonomique en ce que l'objet est maintenu d'une manière naturelle entre les deux « pinces » que forment la naissance du pouce et l'index de chaque main. Dans cette position, l'accès aux touches ou autres moyens de commandes du dispositif se fait naturellement et confortablement au moyen de l'un ou de l'autre des pouces. Cette variante qui permet une préhension sure et stable même en mobilité est bien adaptée à la fonction et convient à tous les âges d'utilisateurs. Bien entendu, on ne sort pas du cadre de l'invention si un dispositif optimisé pour être tenu à deux mains et manipulé avec les pouces est utilisé tenu dans une seule main et manipulé avec d'autres doigts que les pouces.

Un appareil autonome tel que le dispositif selon l'invention embarque une source d'énergie rechargeable ou non. En général, il s'agit d'au moins deux piles montées en série qui dans les télécommandes à l'état de l'art sont traditionnellement logées dans un compartiment commun l'une derrière l'autre ou cote à cote. Il est prévu dans l'invention de dégrouper ces composants généralement encombrants. Il s'agit de séparer ces éléments et de les loger le cas échéant dans des logements séparés pour offrir des avantages tels que réduire l'épaisseur du dispositif dans les zones de préhension en utilisation, créer des points d'appuis stables pour poser le dispositif, créer des zones évidées dans son épaisseur pour faciliter sa prise lorsqu'il est posé sur un support, répartir les masses, guider les doigts pour une préhension plus sure...

La mise en oeuvre de l'invention telle que décrite précédemment fait appel à des moyens physiquement distincts pour se déplacer dans un ensemble de choix et pour déplacer un pointeur sur la surface d'un écran ou dans un espace de restitution 3D. Il est possible dans certaines variantes de mise en oeuvre de l'invention de « factoriser » des moyens pour rendre le dispositif plus compact sans nuire de manière notable à l'ergonomie. Il existe une similitude entre des moyens pour se déplacer sur une surface ou dans un volume et des moyens pour se déplacer dans un espace de choix. Il s'agit essentiellement d'une problématique de gestion du contexte et de l'effet des commandes transmises, les moyens à l'origine de ces commandes dans le dispositif selon l'invention pouvant être au moins en partie communs.
Il peut s'agir par exemple d'un moyen de détermination d'une direction dont la résolution convient pour l'application de déplacement de pointeur. Ce moyen étant par exemple basé sur une pluralité de contacts physiques complétés éventuellement par une logique de traitement créant des contacts virtuels intermédiaires. Il peut s'agir également par exemple d'un mini joystick ou d'un pavé numérique. Un moyen est mis en oeuvre pour passer de l'utilisation du moyen commun pour déplacer un pointeur sur une surface ou dans un volume à son utilisation pour se déplacer dans un espace de choix. Ce moyen peut être un simple bouton à deux états mécaniquement stables et visibles, il peut s'agir également par exemple d'un bouton poussoir de changement de contexte d'utilisation en mode alterné des moyens de navigation ou encore de deux boutons poussoirs, chacun étant dédié à un type d'utilisation donné et identifié comme tel par un marquage approprié. Une mémoire associée à ces boutons dont l'effet est mutuellement exclusif, conserve le choix d'utilisation des moyens communs correspondant au dernier bouton sur lequel l'utilisateur a appuyé.

Comme décrit précédemment pour les moyens de navigation, les commandes associées à chaque type d'utilisation des moyens mis en commun peuvent également être factorisées. Il est prévu dans l'invention que l'effet de ces moyens de commande complémentaires change de manière appropriée avec l'utilisation des moyens de navigation associés. Par exemple les trois boutons dont la signification est « click gauche », « click droit » et « arrimage » dans un contexte de navigation sur une surface ou dans un volume sont réaffectés aux significations « OK », « annulation » et « menu » dans un contexte de navigation dans un ensemble de choix.
Il est également possible sans sortir du cadre de l'invention de mettre en oeuvre des raffinements fonctionnels tels que décrits dans la liste non limitative suivante :
Une touche « menu » sur laquelle un appui positionne automatiquement les moyens de navigation communs dans le mode navigation dans un ensemble de choix.
Une touche d'arrimage qui peut de manière cyclique arrimer le pointeur à sa position courante, sélectionner un objet textuel ou graphique en relation avec la position du pointeur et éventuellement passer automatiquement en mode navigation dans un ensemble de choix parmi une pluralité d'objets représentés par du texte et/ou des éléments graphiques plans ou en volume.

La mise en oeuvre du dispositif selon l'invention se fait au sein d'un système comprenant au moins :
- Un dispositif de télécommande sans fil,
- Un lecteur-enregistreur multimédia numérique connectable à un réseau,
- Des moyens pour restituer des images fixes et/ou animées en 2D et/ou en 3D et/ou du son.

D'autres avantages et caractéristiques de l'invention apparaîtront à l'examen de la description détaillée d'un mode de mise en oeuvre nullement limitatif, et des dessins annexés sur lesquels :
- la figure 1 illustre un mode de mise en oeuvre du dispositif selon l'invention;
- la figure 2 illustre une manière typique de tenir le dispositif de télécommande;
- la figure 3 illustre une réalisation esthétique et mécanique qui tire profit du dégroupage des composants encombrants selon l'invention;
- la figure 4 illustre une autre variante de dégroupage;
- la figure 5 illustre une autre variante de mise en oeuvre de la télécommande selon l'invention;
- la figure 6 illustre le système au sein duquel le dispositif de télécommande selon l'invention est utilisé.

### Description détaillée des figures

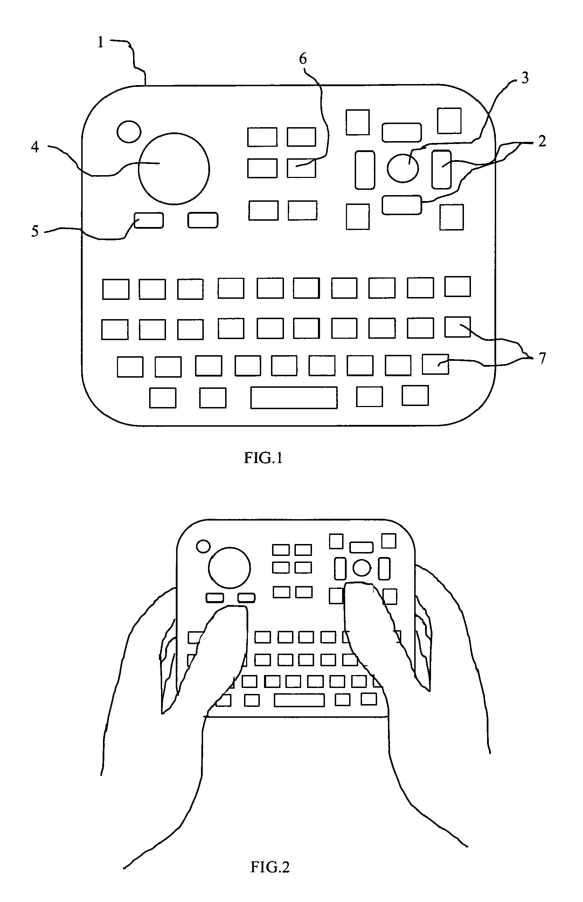

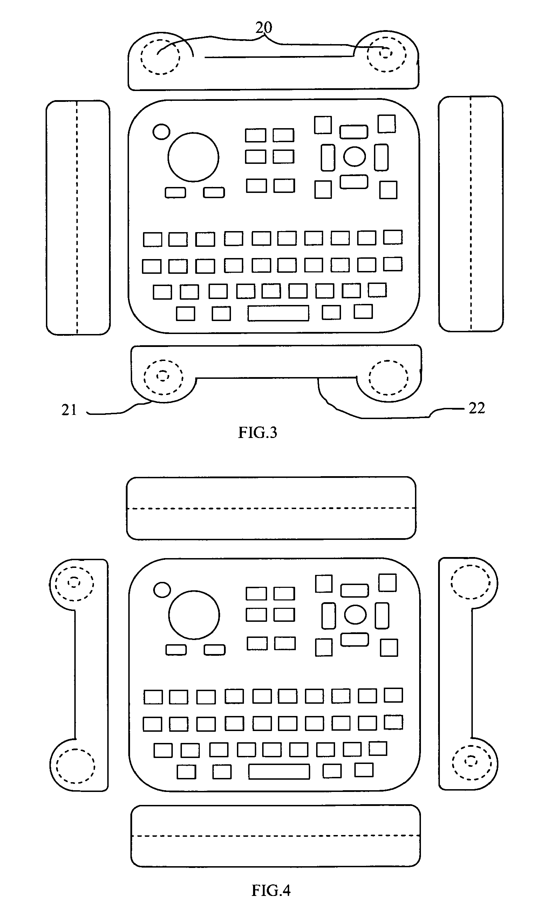

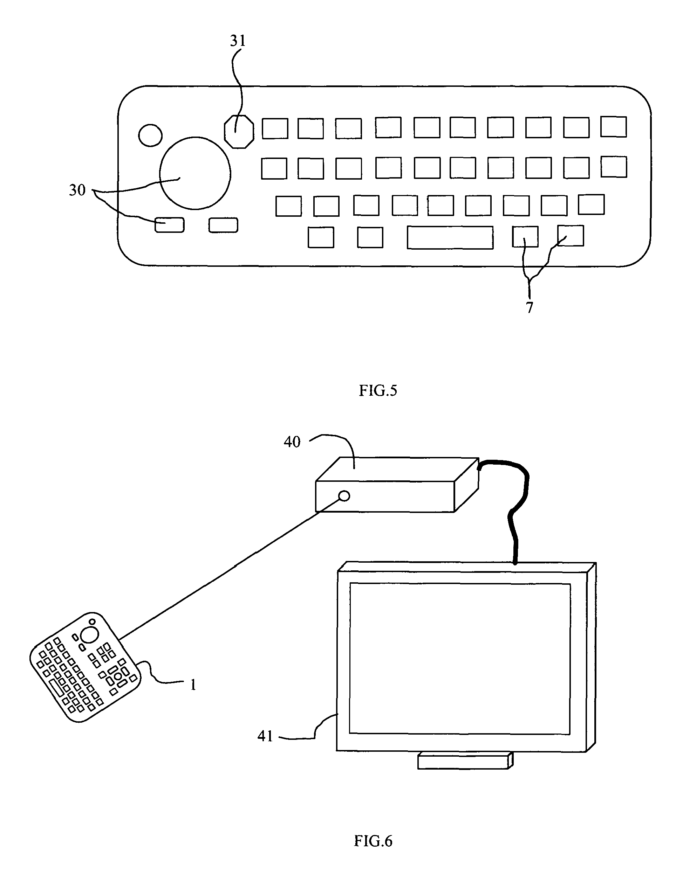

**La** **figure 1** illustre le dispositif de télécommande 1 selon l'invention.
   On y retrouve les éléments caractéristiques suivants :
   - un moyen 2 pour se déplacer dans un ensemble de choix,
   - un moyen 3 pour valider un choix dans un ensemble de choix,
   - un moyen 4 pour déplacer un pointeur sur la surface d'un écran ou dans un espace de restitution 3D,
   - un moyen 5 pour effectuer des actions en relation avec un pointeur,
   - Un clavier alphanumérique 7 comprenant une seule lettre par touche au moins pour les lettres courantes et non accentuée d'un jeu de caractères donné.
   La touche 6 est une commande en relation avec une application audiovisuelle.
**La** **figure 2** illustre un type d'utilisation préféré du dispositif de télécommande selon l'invention. Le dispositif est solidement tenu entre les deux pinces formées par l'index et la naissance du pouce de chaque main. Dans cette position confortable les pouces peuvent atteindre sans effort les boutons et commandes diverses du dispositif.
**La** **figure 3** illustre l'effet bénéfique du dégroupage des composants encombrant, dans cet exemple les piles 20. Ceci permet de créer des zones de pose 21 et des zones de préhension 22 qui participent à l'ergonomie du produit.
**La** **figure 4** illustre une autre variante de ce dégroupage sur le même principe inventif.
**La** **figure 5** illustre un mode de mise en oeuvre de l'invention ou les moyens de navigation 30 et d'action associés sont communs pour décrire une surface ou un volume et un espace de choix. Une commande 31 permet de passer d'un mode à l'autre. Ce type de format se prête bien à une mise en oeuvre exploitant l'orientation traditionnelle dans le cadre des applications audiovisuelles et une orientation horizontale pour les applications nécessitant des saisies textuelles à l'aide d'un clavier 7. Le passage d'un mode à l'autre peut être implicite, les deux orientations fonctionnant simultanément. L'orientation peut être également optimisée dans une orientation ou dans l'autre par une sélection manuelle au moyen d'une commande appropriée ou l'orientation peut être détectée automatiquement par un capteur embarqué.
**La** **figure 6** illustre le système typique de mise en oeuvre du dispositif de télécommande selon l'invention. On y retrouve la télécommande 1, le lecteur-enregistreur numérique multimédia 40 et un moyen de restitution de l'image et du son, dans cet exemple un simple téléviseur.

Bien sûr, l'invention n'est pas limitée aux exemples qui viennent d'être décrits, de nombreux aménagements peuvent y être apportés, d'autres choix de combinaisons de caractéristiques et/ou de mise en oeuvre peuvent être faits sans sortir du cadre de l'invention. En outre, les exemples de solutions ou de standards techniques cités sont ceux qui sont en vigueur au moment du dépôt de la demande brevet. Ils sont susceptibles de disparaitre ou d'être rapidement remplacés par d'autres sans pour autant rendre obsolète l'invention elle même.

## Revendications

1. Dispositif de télécommande utilisant une liaison sans fil pour commander à distance des fonctions d'un lecteur-enregistreur multimédia numérique connectable à un réseau **caractérisé en ce qu'**il comprend :
- Au moins un moyen (2) pour se déplacer dans un ensemble de choix,
- Au moins un moyen (3) pour valider un choix dans un ensemble de choix,
- Au moins un moyen (4) pour déplacer un pointeur sur la surface d'un écran ou dans un espace de restitution 3D,
- Au moins un moyen (5) pour effectuer des actions en relation avec un pointeur,
- Un clavier alphanumérique (7) comprenant une seule lettre par touche au moins pour les lettres courantes et non accentuée d'un jeu de caractères donné.

2. Dispositif selon la revendication 1 **caractérisé en ce qu'**il comprend en outre au moins une commande (6) en relation avec une application audiovisuelle.

3. Dispositif selon l'une quelconque des revendications précédentes, **caractérisé en ce que** la taille du dispositif est telle qu'il peut être tenu dans une main.

4. Dispositif selon l'une quelconque des revendications précédentes, **caractérisé en ce qu'**il est agencé pour être tenu à deux mains et dont les touches peuvent être atteintes par l'un et/ou l'autre des deux pouces.

5. Dispositif selon l'une quelconque des revendications précédentes, **caractérisé en ce que** tout ou partie des composants encombrants (20) qu'il intègre sont dégroupés.

6. Dispositif selon l'une quelconque des revendications précédentes, **caractérisé en ce qu'**il comprend un détecteur de position.

7. Dispositif selon l'une quelconque des revendications précédentes, **caractérisé en ce qu'**au moins une touche du clavier a plusieurs significations.

8. Dispositif selon la revendication 7, **caractérisé en ce que** la signification associée à l'au moins une touche est déterminée par une action préalable de l'utilisateur sur le dispositif.

9. Dispositif selon la revendication 7, **caractérisé en ce que** la signification associée à l'au moins une touche est déterminée par le contexte applicatif.

10. Dispositif selon la revendication 7, **caractérisé en ce que** la signification associée à l'au moins une touche est déterminée par la position du dispositif.

11. Dispositif selon l'une quelconque des revendications précédentes, **caractérisé en ce que** pour au moins une touche du clavier ayant plusieurs significations, la visualisation de cette signification dépend d'un contexte.

12. Dispositif selon la revendication 11, **caractérisé en ce que** la visualisation de la signification associée à la touche est déterminée par l'orientation du dispositif.

13. Dispositif selon la revendication 11, **caractérisé en ce que** la visualisation de la signification associée à la touche est déterminée par le contexte applicatif.

14. Dispositif selon l'une quelconque des revendications précédentes, **caractérisé en ce que** le moyen pour se déplacer dans un ensemble de choix comprend au moins une touche dédiée.

15. Dispositif selon l'une quelconque des revendications précédentes, **caractérisé en ce que** les moyens pour se déplacer dans un ensemble de choix et les moyens pour déplacer un pointeur sur la surface d'un écran ou dans un espace de restitution 3D sont au moins partiellement physiquement confondus.

16. Dispositif selon l'une quelconque des revendications précédentes, **caractérisé en ce que** les moyens pour valider un choix dans un ensemble de choix et les moyens pour des actions en relation avec un pointeur sont au moins partiellement physiquement confondus.

17. Système de commande à distance comprenant :
- Un dispositif de télécommande sans fil,
- Un lecteur-enregistreur multimédia numérique connectable à un réseau,
- Des moyens pour restituer des images fixes et/ou animées en 2D et/ou en 3D et/ou du son.
